# EUROPEAN PATENT SPECIFICATION

(11) **EP 3 027 042 B1**
(45) Date of publication and mention of the grant of the patent: **13.02.2019**
(21) Application number: 14831600.3
(22) Date of filing: 01.08.2014
(51) Int. Cl.: A23G 9/42, A23G 9/36, A23L 3/36, A23L 33/00, A23L 29/206

(54) **METHOD FOR DELIVERING HEALTH-PROMOTING SUBSTANCES INTO A HUMAN BODY**
VERFAHREN ZUR ABGABE GESUNDHEITSFÖRDERNDER SUBSTANZEN IN DEN MENSCHLICHEN KÖRPER
PROCÉDÉ POUR ADMINISTRER DES SUBSTANCES FAVORABLES À LA SANTÉ DANS UN CORPS HUMAIN

(30) Priority: 01.08.2013 US 201361860934 P; 02.08.2013 US 201361861468 P
(43) Date of publication of application: 08.06.2016
(73) Proprietor: Derin, Anatoly, Hallandale Beach, Florida 33009 (US)
(72) Inventor: Derin, Anatoly, Hallandale Beach, Florida 33009 (US)
(74) Representative: Garavelli, Paolo
(86) International application number: PCT/US2014/049354
(87) International publication number: WO 2015/017753

(56) References cited:
- EP-A1- 1 676 486
- EP-A1- 1 676 486
- EP-A1- 1 925 210
- WO-A1-03/020048
- WO-A1-2011/069224
- WO-A2-2008/009618
- CN-A- 101 530 152
- RU-C1- 2 142 711
- RU-C2- 2 409 968
- UA-U- 54 416

## Description

### BACKGROUND OF THE INVENTION

This application and its disclosure generally relate to the field of delivering healthy substances into a human body.

Various methods and systems of delivering health-promoting substances into a human body have been developed over the years. For example, many vitamins and minerals are administered to people in the form of pills, powders and/or injections. However, a lot of people find these methods of delivery unpalatable.

To eliminate problems associated with prior art methods of delivering and administering health-promoting substances, the present invention discloses a new system of delivering such substances. WO-A1-2011/069224, WO-A1-03/020048, CN-A-101530152, EP-A1-1925210 and EP-A1-1676486 disclose substances according to the prior art.

### SUMMARY OF THE INVENTION

Generally, it is an object of the present invention to provide a novel delivery method of various health and wellbeing-promoting substances into a human body.

In a general aspect, the invention is a method for delivering a health promoting substance according to claim 1.

### BRIEF DESCRIPTION OF THE DRAWINGS

Figure 1 is a schematic diagram of the steps of the method of delivering health promoting substances into a human body in accordance with the first embodiment;
Figure 2 is a schematic diagram of the steps of the method of delivering health promoting substances into a human body in accordance with the second embodiment
Figure 3 is an illustration of the nutritional composition of the frozen dessert
Figure 4 is an illustration of the nutritional composition of the frozen dessert;
Figure 5 is an illustration of the nutritional composition of the frozen dessert;
Figure 6 is an illustration of the nutritional composition of the frozen dessert;
Figure 7 is an exemplary formulation sheet for the frozen dessert incorporating a health-promoting ingredient; and
Figure 8 is an exemplary formulation sheet for the frozen dessert incorporating a health-promoting ingredient.

### DETAILED DESCRIPTION OF THE INVENTION

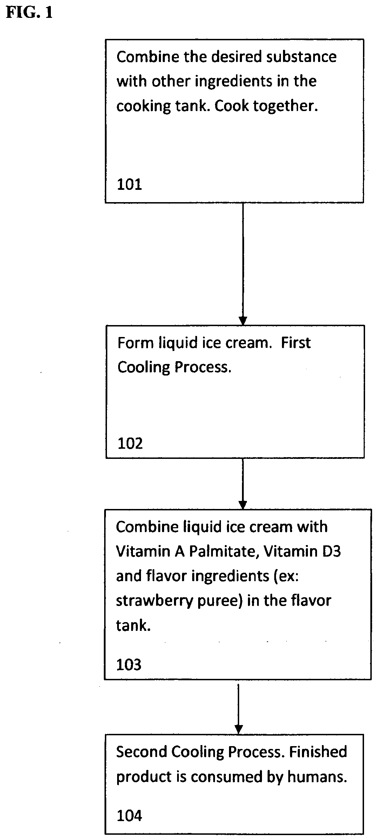

As illustrated in the attached Figures, in accordance with the preferred embodiment, a health promoting frozen dessert (hereinafter also referred to as "ice cream") is formulated with desired health promoting ingredients. As shown in Fig. 1, the method of delivering a health promoting substance into a human body, the desired health promoting substance (e.g., Garcinia Cambogia) is first combined with Butter, Water, Milk Protein Concentrate, Maltitol, Erythritol, Organic Agave Inulin, Xanthan Gum, Locust Bean Gum, and Guar Gum in a cooking tank, where all of the ingredients are cooked together. The preferred ratio of ingredients is: 1 serving of ice cream to 1 recommended dose of the desired health promoting substance. Step 101. Next, liquid ice cream in combination with the desired substance is formed during the first cooling process. Step 102. After the cooling process of the liquid ice-cream is completed, it is combined with at least one flavor ingredient, for example, strawberry puree, and with other desired ingredients, e.g., Vitamin A Palmitate, and Vitamin D3 in a flavor tank. Step 103. Finally, the second cooling process completes formation of the ice-cream, which can subsequently be consumed by humans. Step 104.

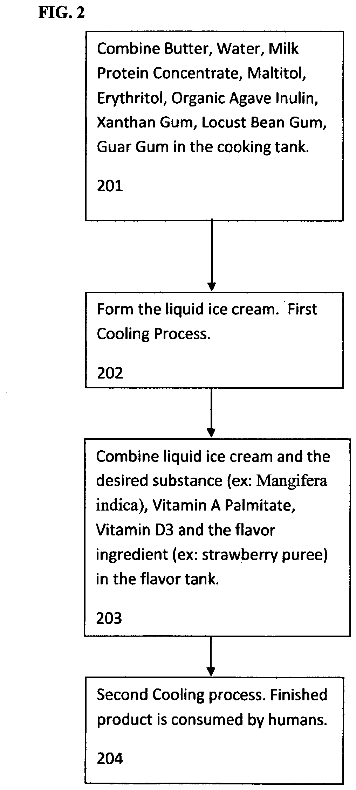

Alternatively, as shown in Fig. 2, in the method of delivering a health promoting substances into a human body, Butter, Water, Milk Protein Concentrate, Maltitol, Erythritol, Organic Agave Inulin, Xanthan Gum, Locust Bean Gum, and Guar Gum are first combined in a cooking tank, where all of the ingredients are cooked together. Step 201. Next, liquid ice cream is formed during the first cooling process. Step 202. After the cooling process of the liquid ice-cream is completed, it is combined with the desired health to 1 recommended dose of the desired health promoting substance. Step 203. Finally, the second cooling process completes formation of the ice-cream, which can subsequently be consumed by humans. Step 204.

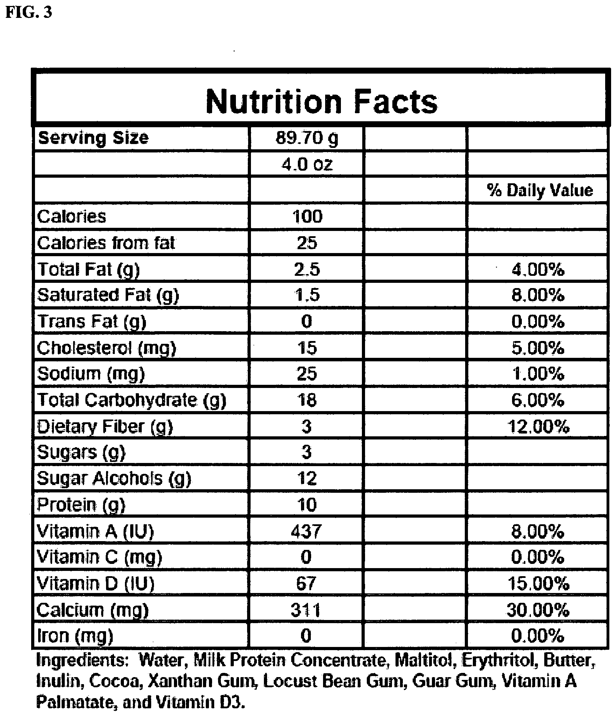

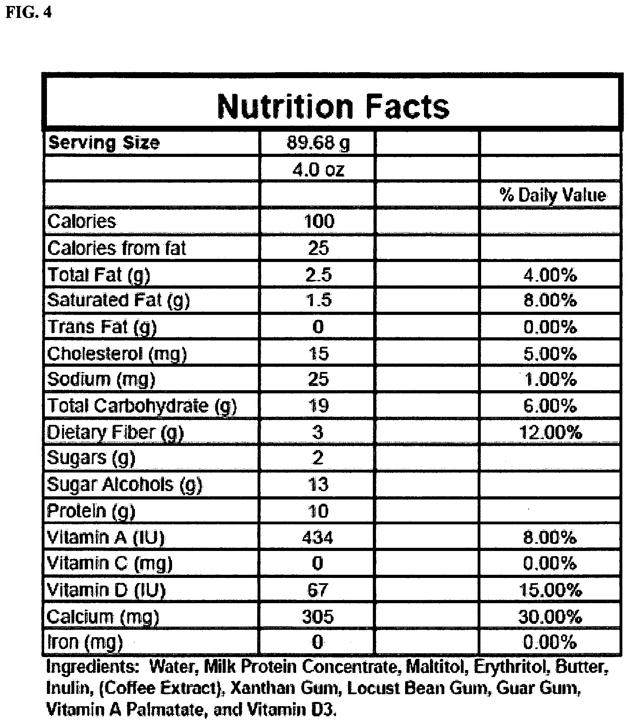

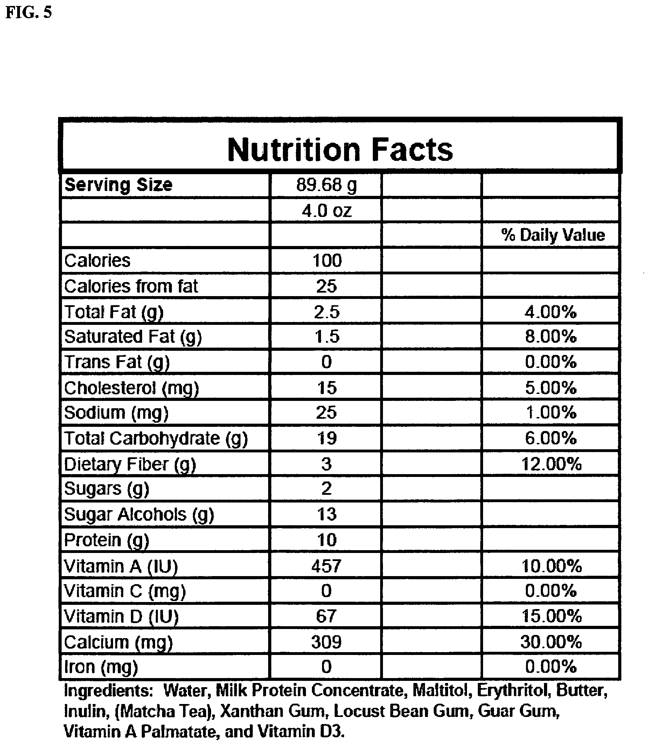

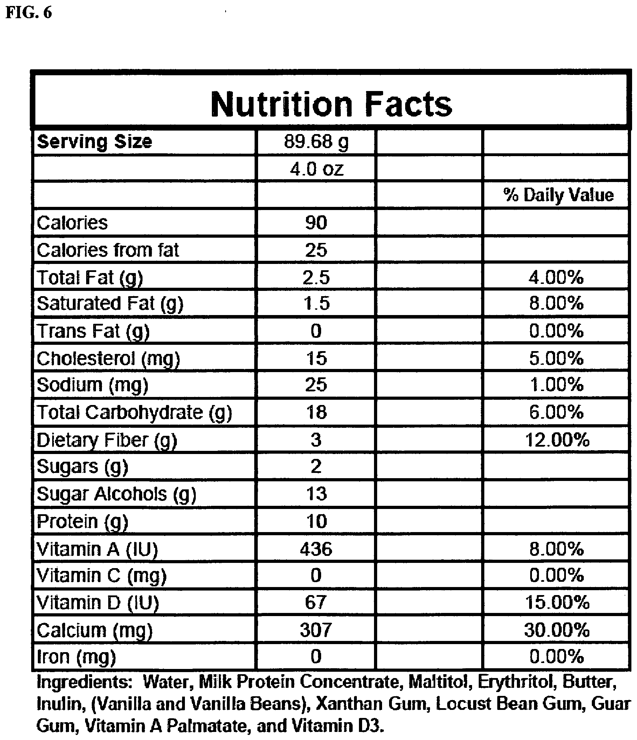

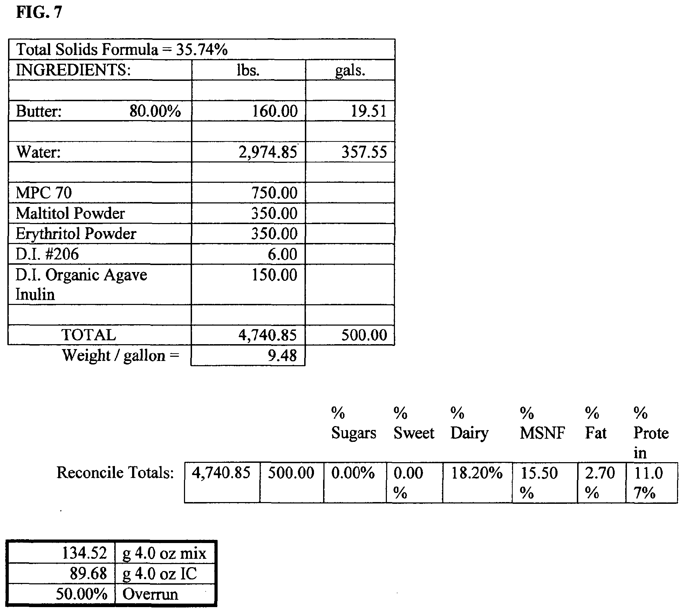

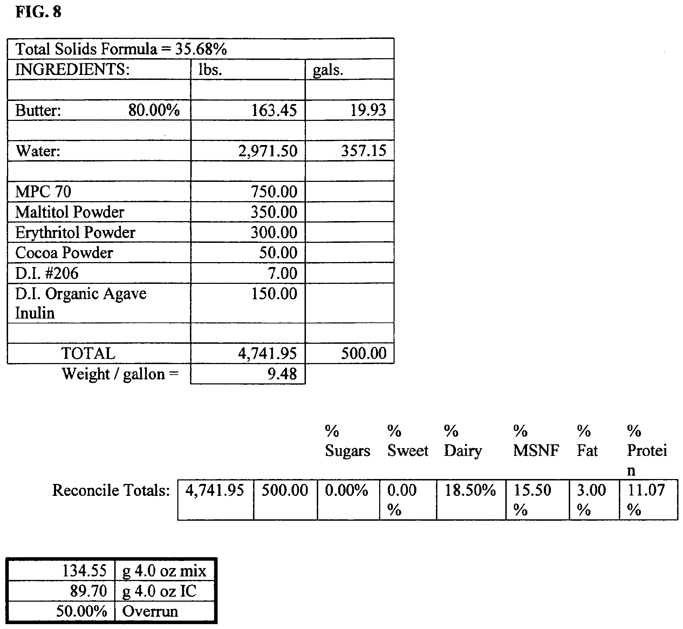

The "delivery system" in the present disclosure is a frozen dessert, for example, ice cream with any fat content, frozen yogurt, gelato, frozen shakes and smoothies, etc. Specifically, as shown in Figs. 3-8, the frozen dessert comprises a substance having a desired health benefit, the substance being herbal or botanical in nature. Specifically, a desired health promoting substance (e.g., Damiana flower extract) is combined with Butter, Water, Milk Protein Concentrate, Maltitol, Erythritol, Organic Agave Inulin. Xanthan Gum, Locust Bean Gum, Guar Gum, Vitamin A Palmitate, Vitamin D3, and at least one flavor ingredient, and is formed into a frozen dessert-like product to be consumed by humans.

As illustrated in the attached Figures, in accordance with one preferred embodiment, a low fat protein rich ice cream is made with Butter, Water, Milk Protein Concentrate, Maltitol, Erythritol, Organic Agave Inulin, Xanthan Gum, Locust Bean Gum, Guar Gum, Vitamin A Palmitate, Vitamin D3, along with the flavor ingredient. The frozen dessert is currently avaialble in four flavors: Chi Energy Coffee, Dragon Green Tea, Midnight Chocolate Bliss and Vanilla Bean Dream. The key benefits of this embodiment of the frozen dessert are that it is Vitamins A and D3 fortified, contains organic pre-biotic fiber and milk protein concentrate, and contains no artificial flavors, preservatives, antibiotics, added sugar, gluten, hormones and soy. The preferred vitamin content of this formula is shown below in Table 1.

**Table 1. PROTEIN FORMULATION (with added vitamins)**

| Recalculated Vitamin Values | A | D3 |
|---|---|---|
| Vanilla Bean Dream | 603 IU | 100 IU |
| Chi Energy Coffee | 601 IU | 100 IU |
| Dragon Green Tea | 624 IU | 100 IU |
| Midnight Chocolate Bliss | 600 IU | 100 IU |

In accordance with the preferred embodiment, the Vanilla Bean Dream frozen dessert includes the following ingredients: Butter, Water, Milk Protein Concentrate, Maltitol, Erythritol, Organic Agave Inulin, Xanthan Gum, Locust Bean Gum, Guar Gum, Vanilla Bean Extract, Vanilla Bean Specks, Vitamin A Palmitate, Vitamin D3. In accordance with the preferred embodiment, the Chi Energy Coffee frozen dessert includes the following ingredients: Butter, Water, Milk Protein Concentrate, Maltitol, Erythritol, Organic Agave Inulin, Xanthan Gum, Locust Bean Gum, Guar Gum, Coffee Extract, Vitamin A Palmitate, Vitamin D3. In accordance with the preferred embodiment, the Midnight Chocolate Bliss frozen dessert includes the following ingredients: Butter, Water, Milk Protein Concentrate, Maltitol, Erythritol, Organic Agave Inulin, Xanthan Gum, Locust Bean Gum, Guar Gum, Cocoa Powder (Processed with Alkali), Vitamin A Palmitate, Vitamin D3. In accordance with the preferred embodiment, the Dragon Green Tea frozen dessert includes the following ingredients: Butter, Water, Milk Protein Concentrate, Maltitol, Erythritol, Organic Agave Inulin, Xanthan Gum, Locust Bean Gum, Guar Gum, Green Tea Powder, Vitamin A Palmitate, Vitamin D3. Finally, In accordance with the preferred embodiment, the Strawberry Chill frozen dessert includes the following ingredients: Butter, Water, Milk Protein Concentrate, Maltitol, Erythritol, Organic Agave Inulin, Xanthan Gum, Locust Bean Gum, Guar Gum, Strawberries Puree, Vitamin A Palmitate, Vitamin D3.

In accordance with another preferred embodiment, an energy-promoting low fat ice cream is made with Butter, Water, Milk Protein Concentrate, Maltitol, Erythritol, Organic Agave Inulin, Xanthan Gum, Locust Bean Gum, Guar Gum, Vitamin A Palmitate, Vitamin D3, along with at least one flavor ingredient and an energy blend of Caffeine, Taurine, Inositol, Vitamin B6, and Vitamin B12. This particular the energy busting ice-cream formula has no added sugar, low carbohydrates, low cholesterol and reduced calories. The energy frozen dessert tastes just like regular ice cream and delivers energy without any sugar rush or post-energy-drinks crashes. The product can be consumed as a snack to provide a pre-workout boost or a post-workout pick-me-up. Various flavor ingredients can be utilized with this formula, e.g., acai berry, orange, strawberry, etc.

In accordance with a further preferred embodiment, a libido enhancing low fat ice cream is made with Butter, Water, Milk Protein Concentrate, Maltitol, Erythritol, Organic Agave Inulin, Xanthan Gum, Locust Bean Gum, Guar Gum, Vitamin A Palmitate, Vitamin D3, along with at least one flavor ingredient, Zinc and Damiana flower extract. The key benefit of this formula is the libido boosting effect for both men and women. Damiana (Turnera diffusa) has long been claimed to have a stimulating effect on libido, and its use as an aphrodisiac has continued into modern times. The resulting aphrodisiac frozen dessert tastes just like regular ice cream with a taste similar to figs. The product can be consumed as a snack to increase male functionality and to increase libido in both genders. Various flavor ingredients can be utilized with this formula, e.g., blueberries, acai berry, etc.

In accordance with a further preferred embodiment, a weight-loss promoting low fat ice cream is made with Butter, Water, Milk Protein Concentrate, Maltitol, Erythritol, Organic Agave Inulin, Xanthan Gum, Locust Bean Gum, Guar Gum, Vitamin A Palmitate, Vitamin D3, along with at least one flavor ingredient and Garcinia Cambogia extract that promotes weight loss. Its key benefits: it lowers LDL cholesterol and triglycerides and causes weight loss in humans. Garcinia's inhibition of synthesis of lipids causes glycogen to increase in the liver; the resulting satiety signals sent to the brain causes reduced appetite. The frozen dessert in accordance with this embodiment features no added sugar due to natural sugar replacement, low carbohydrates, and low calories making it desirable for anyone who is trying to lose weight. Another example of weight-loss promoting substance is a Mangifera indica extract, which can be used instead of Garcinia Cambogia or in combination therewith. Various flavor ingredients can be utilized with this formula, e.g., strawberry, mango, etc.

In accordance with a further preferred embodiment, an anti-menstrual cramps and anti-depression frozen dessert is made with Butter, Water, Milk Protein Concentrate, Maltitol, Erythritol, Organic Agave Inulin, Xanthan Gum, Locust Bean Gum, Guar Gum, Vitamin A Palmitate, Vitamin D3, along with at least one flavor ingredient and Kava Kava and/or Bilberry root extract. Kava Kava has been recommended for insomnia, depression and anxiety. Kava Kava works on the central nervous system, and promotes relaxation to those suffering from anxiety or depression. Because of the relaxant properties of Kava Kava, it is very beneficial in treating menstrual cramps as the Kava Kava relaxes the uterus. The frozen dessert in accordance with this embodiment features no added sugar, low carbohydrates, and reduced calories. The product can be consumed as a snack to produce physical and mental relaxation and a feeling of well-being. Various flavor ingredients can be utilized with this formula, e.g., mixed berries, chocolate, coconut, etc.

In accordance with a further preferred embodiment, a low fat ice cream which helps to stabilize and regulate blood sugar is made with Butter, Water, Milk Protein Concentrate, Maltitol, Erythritol, Organic Agave Inulin, Xanthan Gum, Locust Bean Gum, Guar Gum, Vitamin A Palmitate, Vitamin D3, along with at least one flavor ingredient and a number of herbal extracts that are known to stabilize and regulate blood sugar e.g., Fenugreek, Bilberry, Cinnamon, Jambul Berry, and Hibiscus. The key benefit of the frozen dessert, in accordance with this embodiment, is that it delivers a variety of natural supplements to help stabilize and regulate blood sugar. No added sugar, low carbohydrates, and reduced calories make the product desirable for anyone who cannot enjoy frozen desserts due to their medical (diabetic) condition. Various flavor ingredients can be utilized with this formula, e.g., mixed berries, chocolate, green tea, purple tea, coconut, etc.

In accordance with a further preferred embodiment, a low fat ice cream that enhances immune system is made with Butter, Water, Milk Protein Concentrate, Maltitol, Erythritol, Organic Agave Inulin, Xanthan Gum, Locust Bean Gum, Guar Gum, Vitamin A Palmitate, Vitamin D3, along with at least one flavor ingredient and Echinacea flower extract that helps to enhance our immune system. The key benefits of this frozen dessert is that it enhances human immune system and can be used as a remedy for a range of infections and health problems, in particular colds and flu. No added sugar, low carbohydrates, and reduced calories make the product desirable for anyone who is trying to enhance their immune system, looking to take precautionary steps to prevent common cold or flu. Various flavor ingredients can be utilized with this formula, e.g., strawberry, grape, pineapple, etc.

In accordance with a further preferred embodiment, a low fat ice cream that enhances cognitive performance is made with Butter, Water, Milk Protein Concentrate, Maltitol, Erythritol, Organic Agave Inulin, Xanthan Gum, Locust Bean Gum, Guar Gum, Vitamin A Palmitate, Vitamin D3, along with at least one flavor ingredient and Melissa officinalis extract which enhances human cognitive performance. The key benefits of this frozen dessert is that it enhances the cognitive performance and can be used as a remedy to relief stress and for weight management. No added sugar, low carbohydrates, and reduced calories make the product desirable for anyone who is trying to enhance their alertness and concentration. Another example of cognitive performance enhancer is Ginkgo biloba extract. Various flavor ingredients can be utilized with this formula, e.g., green tea, mint, lemon, etc.

The "substances" in the substance delivery system are the ingredients that have the effect described in the product description, i.e., protein, energy complexes, aphrodisiac/libido enhancing plants/herbs, blood regulating/stabilizing plants/herbs, anti-menstrual/anti-depression plants/herbs, immune system enhancing plants/herbs. These could be in the form of but not limited to: powders, extracts, concentrates, oils, elixirs, etc.

## Claims

1. A method for delivering a health promoting substance as a frozen dessert, the method comprising the steps of:
providing a solid state or liquid health promoting substance comprising at least one of Vitamin A, Palmitate, Vitamin D3, a Damiana flower extract, a Garcinia Cambogia extract, a Mangifera Indica extract, a Fenugreek extract, a Bilberry extract, a Cinnamon extract, a Jambul Berry extract, a Hibiscus extract, a Kava Kava extract, a Bilberry root extract, an Echinacea flower extract, a Melissa Officinalis extract, or a Gingko Biloba extract;
combining the solid state health promoting substance with butter, water, milk, protein concentrate, maltitol, erythritol, organic agave inulin, xanthan gum, locust bean gum, and guar gum ingredients in a cooking tank and cooking all combined ingredients together;
thereafter, forming an enhanced liquid frozen dessert by cooling the cooked combined ingredients in a first cooling step;
after the first cooling step is completed, combining the enhanced liquid frozen dessert with at least one flavor ingredient in a flavor tank to form a flavored enhanced liquid frozen dessert; and
thereafter, solidifying the flavored enhanced liquid frozen dessert by cooling it in a second cooling step;
wherein a ratio of ingredients is one serving of the solidified flavored enhanced frozen dessert to one recommended dose of the health promoting substance.

## Patentansprüche

1. Methode für die Verabreichung einer gesundheitsfördernden Substanz als Eisdessert, die Methode schließt folgende Phasen ein:
Eine gesundheitsfördernde Substanz in festem oder flüssigem Zustand vorsehen, die mindestens eins der folgende Vitamine oder Extrakte enthält: Vitamin A, Palmitat, Vitamin D3, ein Damiana-Blütenextrakt, ein Garcinia-Cambogia-Extrakt, ein Mangifera-Indica-Extrakt, ein Bockshornkleeextrakt, ein Blaubeerenextrakt, ein Zimtextrakt, ein Jambulbeerenextrakt, ein Hibiskusextrakt, ein Kava-Kava-Extrakt, ein Blaubeerwurzel-Extrakt, ein Echinacea-BlütenExtrakt, ein Melissa-Officinalis-Extrakt oder ein Gingko-Biloba-Extrakt;
die gesundheitsfördernde Substanz im festen Zustand mit Butter, Wasser, Milch, Proteinkonzentrat, Maltitol, Erythritol, organischem Agaveninulin, Xanthangummi, Johannesbrotgummi, Guargummi als Bestandteile in einem Kühlbehälter vermischen, und alle vermischten Bestandteile kühlen;
danach ein verbessertes Eisdessert zubereiten, indem die gekochten vermischten Bestandteile in einer ersten Kühlungsphase gekühlt werden;
nach Beendigung der ersten Kühlungsphase das verbesserte flüssige Eisdessert mit mindestens einem Aromastoff in einem Aromabehälter vermischen, um ein aromatisiertes verbessertes flüssiges Eisdessert zuzubereiten; und
danach das aromatisierte verbesserte flüssige Eisdessert verfestigen, indem es in einer zweiten Kühlungsphase gekühlt wird;
wobei das Verhältnis der Bestandteile eine Dosis des verfestigten aromatisierten verbesserten Eisdesserts gegenüber einer empfohlenen Dosis der gesundheitsfördernden Substanz ist.

## Revendications

1. Méthode pour administrer une substance qui promeut la santé comme dessert congelé, la méthode comprend les phases de :
prévoir une substance de promotion de la santé à l'état solide ou liquide comprenant au moins l'un des éléments suivants : Vitamine A, palmitate, Vitamine D3, un extrait de fleurs Damiana, un extrait de Garcinia Cambogia, un extrait de Mangifera Indica, un extrait de fenugrec, un extrait de myrtille, un extrait de cannelle, un extrait de baies de jamblon, un extrait d'hibiscus, un extrait de Kava Kava, un extrait de racines de canneberge, un extrait de fleurs d'Echinacée, un extrait de Mélisse Officinale ou un extrait de Kingko Biloba ;
associer la substance de promotion de la santé à l'état solide à du beurre, de l'eau, du lait, du concentré de protéines, du maltitol, de l'érithrytol, de l'inuline d'agave organique, de la gomme xanthane, de la gomme de caroube, de la gomme de guar comme ingrédients dans un réservoir de refroidissement puis refroidir ensemble tous les ingrédients associés ;
après cela, former un dessert congelé liquide amélioré en refroidissant les ingrédients associés cuits dans une première phase de refroidissement ;
au terme de la première phase de refroidissement, ajouter au dessert congelé liquide amélioré au moins un ingrédient d'arôme dans un réservoir pour arômes afin d'obtenir un dessert congelé liquide amélioré aromatisé ; et
à ce stade, solidifier le dessert congelé liquide amélioré aromatisé en le refroidissant dans une seconde phase de refroidissement ;
où le rapport des ingrédients est une dose du dessert congelé amélioré aromatisé solidifié par rapport à une dose conseillée de la substance de promotion de la santé.
